# EUROPEAN PATENT APPLICATION

(11) **EP 1 520 810 A1**
(43) Date of publication of application: **06.04.2005**
(21) Application number: 04255923.7
(22) Date of filing: 28.09.2004
(51) Int. Cl.: B65G 47/14, B65G 47/256

(54) **Sorting unit for a vibration-type parts feeding device**

(30) Priority: 30.09.2003 JP 2003339782
(71) Applicant: Dengensha Manufacturing Company Limited, Kawasaki-shi, Kanagawa (JP); S-K Kougyou Company Limited, Nagoya-shi, Aichi (JP)
(72) Inventor: Hayata, Yoshimi, Dengensha Manufact. Company Ltd., Kawasaki-shi Kanagawa (JP); Katsuyama, Shun-ichirou, S-K Kougyou Company Ltd., Nagoya-shi Aichi (JP)
(74) Representative: Rees, Alexander Ellison

(57) **Abstract**

This invention is, in a vibration-type parts feeding method and its device that welding nuts are put on a parts transportation track (3) arranged in an inner wall of a vibration bowl (2) of a parts feeder to be arranged in turn and normal positioned welding nuts are sorted and transported from a parts discharging outlet at a top end portion of the track to a desired place, that a sort unit (7) for passing only the normal positioned welding nuts is installed detachably to adjacent to the parts discharging outlet of the vibration bowl (2), and thus, that it becomes possible to correspond to sorting upward and downward of the welding nuts with various kinds of shapes and dimensions.

## Description

The present invention relates to a parts feeder (a vibration-type parts feeder) attached to and employed in a resistance spot welding machine, and further in detail, relates to a parts feeding method and its device for sorting right and wrong positioning of projection nuts that projections (projections for welding) are formed at four corners thereof and other similar small parts (hereinafter, welding nuts).

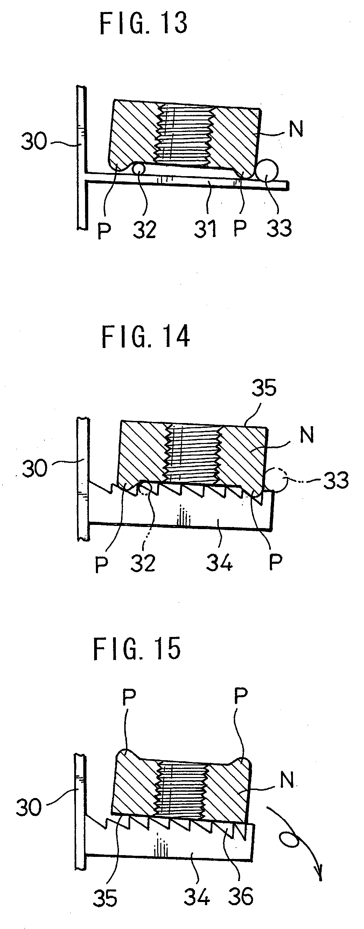

As shown in Fig. 13 through 15, up to this time, a nuts feeding method and its device such that, when welding nuts N providing with projections for welding P are lined up and fed continuously on a transportation track 31 which stands up spirally from a bottom portion of a vibration bowl 30, it is judged whether each of the welding nuts is upward or downward on the way that the welding nuts go up along the transportation track 31, nuts whose projections are downward (normal position parts) and whose projections are upward (abnormal position parts) pass on a tooth track 34 to be selected upward or downward of the nuts, and the only normal position parts are transported to a feeder unit (a head for supplying nuts) which is attached to a spot welding machine, is known generally.

A method for selecting upward parts or downward parts and its device in the prior art is that a tooth track 34 for selection in which several teeth are formed along a direction that the parts move is connected in series to an end portion of the transportation track 31.

In this case, as shown in Figs. 13 and 14, the normal position parts move along guide rails 32, 33 consisting of large and small metal round bars, and are advanced and transported to a part transportation opening in a condition that projections P of the welding nuts N are engaged with the teeth when the nuts go over the tooth track 34.

On the other hand, as shown in Fig. 15, because a flat surface 35 in a upper portion of the nut is not engaged with tooth grooves 36 when the projections P is inverse (upward), the nuts fall into the vibration bowl to collect. Then, the nuts go up along the transportation track 31 again.

Omitting in figures, nuts selected and arranged normally are transported to a rail extending to an outside of the bowl and are separated individually by a separation device on the way thereof. The separated nut is supplied to the feeder unit by being blown away into a supply hose by a compressed air injected from an air nozzle.

The welding nut transported to the feeder unit is stopped once in the feeder unit. The stopped nut is held at an end of a spindle by driving the spindle for supplying welding nut forwardly from the feeder unit. The welding nut held by the spindle is removed form a stopper position by an advance of the spindle to be supplied to a work set position of a lower electrode.

The supplied welding nut is gripped with a work set on the lower electrode by pressing movement of an upper electrode and is heated and melted with the work by applying a necessary pressure between the electrodes and sending an electric current for welding to the projection of the nut to be joined together.

In the prior vibration-type welding nuts feeding device, various selection methods such as a tooth-shaped track and guide rails consisting of large and small metallic round bars are adopted.

As far as the applicant considered about the above-mentioned prior art documents, a mechanism for selecting upward and downward surfaces of the welding nuts or a vibration-type welding nuts feeding device with a function for sorting is published in JP 60-151821 U, JP 62-074617 U, JP 2000-219314 A and JP 2001-072233 A, but they only disclose a changing for sorting unit or adjusting parts of the unit, and a sorting method corresponding to changing of shape dimensions of the feeding parts by a common bowl can not be confirmed.

Accordingly, problems to be resolved by the present invention are that a cost cut and a date of delivery can not be achieved because a vibration bowl for exclusive use every size of the welding nuts is necessary when outside dimension of the welding nuts is changed in the prior vibration-type welding nuts feeding system and device, for instance, from M6 type nuts to M8 type nuts, and that a standardized product can not be materialized because skill and experience are necessary in order to weld the guide rails of the metallic round bars so as to match a track line in the prior device for sorting upward and downward of the welding nuts.

The present invention is developed for resolving the above problems. A first invention is to provide a vibration-type parts feeding method that welding nuts with projections are put on a spiral shaped parts transporting track which is provided in a vibration bowl in a parts feeder for sorting the welding nuts to be arranged in turn, and the parts are transported from a parts outlet at a top end portion of the track to a desired portion, characterized in that an unit for sorting upward and downward of the welding nuts is mounted detachably, and sorting upward and downward of the welding nuts with different dimensions is made possible by changing the unit for sorting only or adjusting parts of the unit for sorting.

A second invention is to provide a vibration-type parts feeding device is a parts feeder for feeding welding nuts on a panel work so that the welding nuts with projections and the panel work are pressed and welded together by upper and lower electrodes of a resistance spot welding machine, the parts feeder comprising a vibration bowl housing a large number of the welding nuts with projections, a parts transportation track arranged spirally along an inside wall of the vibration bowl so as to rise and transport the welding nuts in series to an upper outlet of the bowl by vibration of the bowl while getting on and arranging the welding nuts in turn in the vibration bowl, and a sorting unit for judging normal and abnormal positions of the welding nuts which is mounted detachably and adjacently to the parts outlet of the vibration bowl.

Besides, a third invention is such that a presser plate for sorting the welding nuts and/or a width limitation plate are provided in the sorting unit, and mounting positions of them can be adjusted corresponding to width and height of the welding nuts including projections for welding.

That is to say, distance between a sorting rail of the presser plate and the width limitation plate can be adjusted by moving the width limitation plate in a width direction of the parts transportation track corresponding to shape dimensions of the projections for welding of the welding nuts.

Furthermore, the presser plate can be changed when the distance between the width limitation plate and the sorting rail does not match with the dimension of the feeding parts.

As the above, by the method according to the first invention, even when outside dimension of the welding nut is changed from M6 type to M8 type whose sizes are different, the vibration bowl for M6 type can be used as it is by only changing a sorting unit or adjusting it. Furthermore, because feeding parts merely go up along the transportation track in the vibration bowl in spite of dimensions of them, a common vibration bowl can be used if the outside dimensions of the welding nuts are changed.

Accordingly, comparing with the prior parts sorting methods, though a vibration bowl corresponding to each shape change of sorted parts is needed so far, standardization of the vibration bowl can be materialized by the method according to the present invention, so that a processing for welding the sorting rail to the parts track in the transportation track as shown in prior arts, a skill for welding and empirical rule of it are not necessary at all. As sorting functions are provided at one place by unification, a structure of the vibration bowl becomes simple, so that increase of durability is designed and man-hour for manufacturing it can be decreased largely.

Besides, because the device according to the second invention is that only the sorting unit at the parts outlet portion of the transportation track is changed or adjusted without using the tooth-shaped track as prior arts, connection to the tooth-shaped track or adjustment of the guide rails when the parts transfer to the tooth shape grooves etc. are unnecessary at all. Accordingly, sorting ability can be increased as long as the tooth-shaped track and the round bars for guide rails in comparison with the prior device, a labor of manufacturing can be saved, and further, it is possible to reduce costs largely by standardization of the sorting unit and the vibration bowl.

Furthermore, by the device according to the third invention, height or distance of the track is adjusted according to outside dimensions of the sorted parts, so that increase of the sorting ability can be materialized.

Moreover, in the device of the present invention, distance between the sorting plate and the sorting rail can be adjusted by moving the width limitation plate in a plate width direction of the parts track easily corresponding to shapes or sizes of the nuts or the projections.

Besides, because the sorting plate can be changed when a fixing distance between the width limitation plate and the sorting rail does not match with the dimensions of the fed parts, kinds of the sorting unit to be prepared may be a few by that exchange of the sorting unit for the parts is finished by the selection of the necessary minimum.

Furthermore, there is a case such that normal positioned welding nuts drop from the tooth-shaped track by vibration due to a condition that the projections are engaged with the tooth grooves, and a sorting system by the tooth-shaped track is one of factors that a sequential sorting ability is decreased. Moreover, in order that the welding nuts are transferred from the parts transportation track o the tooth-shaped track in continuous movement more, delicate adjustment of two guide rails is necessary, and there is a problem such that sorting precision is influenced largely due to a result of the adjustment.

To this, according to the present invention, because the sorting unit in which the width limitation plate and the presser plate combine with the sorting plate including the rail is constituted compactly, so that the structure of it is simple and the width limitation plate and the presser plate are merely adjusted corresponding to the shape and the dimensions of the welding projections of the welding nuts, as a result, it is easy to apply to other vibration bowls as a simple product of the sorting unit.
Fig. 1 is a schematic plan view illustrating an embodiment of a vibration-type welding nuts feeding device for working a method in the present invention;
Fig. 2 is a plan view illustrating an embodiment of an unit for sorting upward and downward of the welding nuts of the present invention and illustrating a detail structure concretely;
Fig. 3 is a view taken in a direction of an arrow A in the embodiment of the sorting unit in the present invention;
Fig. 4 is a view taken in a direction of arrows B in the embodiment of the sorting unit in the present invention;
Fig. 5 is a schematic cross sectional view illustrating attaching a bowl main body, a structure of assembling unit parts and a parts track;
Fig. 6 is a cross sectional view illustrating a form that normal positioned welding nuts passing through the sorting unit of the present invention pass through a second wiper and which is taken in a direction of arrows D in Fig. 10;
Fig. 7 is a cross sectional view illustrating a form that abnormal positioned welding nuts passing through the sorting unit of the present invention are blocked by a second wiper and drop;
Fig. 8 is a cross sectional view illustrating a structure of the sorting plate including a sorting rail within the sorting unit of the present invention and a relationship between outside dimensions of the welding nuts and a width limitation plate for adjusting distance of the parts track;
Fig. 9 is a cross sectional view illustrating a structure of the sorting plate including a sorting rail within the sorting unit of the present invention and a relationship between outside dimensions of the welding nuts and a presser plate for adjusting height of the parts track;
Fig. 10 is a schematic plan view illustrating the welding nuts passing through the sorting unit of the present invention device by enlargement;
Fig. 11 is a view which is taken in a direction of arrows C-C in Fig. 10;
Fig. 12 is a schematic view illustrating a form that a transporting quantity of the welding nuts is defined by a first wiper;
Fig. 13 shows a structure of a transportation track in a prior device and is a schematic cross sectional view illustrating normal positioned welding nuts go forward along guide rails of two large and small round bars arranged on the track;
Fig. 14 shows a system for sorting parts in the prior device and is a schematic cross sectional view illustrating a form that the normal positioned welding nuts transfer from the round bars guide rails to a tooth-shaped track; and
Fig. 15 shows a system for sorting parts in the prior device and is a schematic cross sectional view illustrating a form that abnormal positioned welding nuts are removed and drop from the tooth-shaped track.

An object of the invention is to materialize standardization of a vibration-type parts feeding device which can correspond by changing or adjusting only a sorting unit at a portion of a parts transportation track of a vibration bowl even if outside dimensions of welding nuts are changed against a prior welding nuts feeding system which has a vibration bowl only for it.

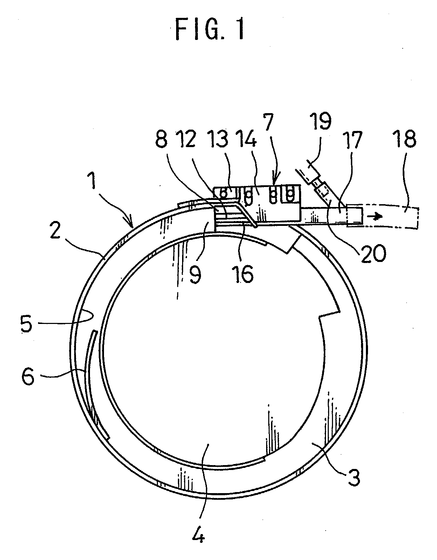

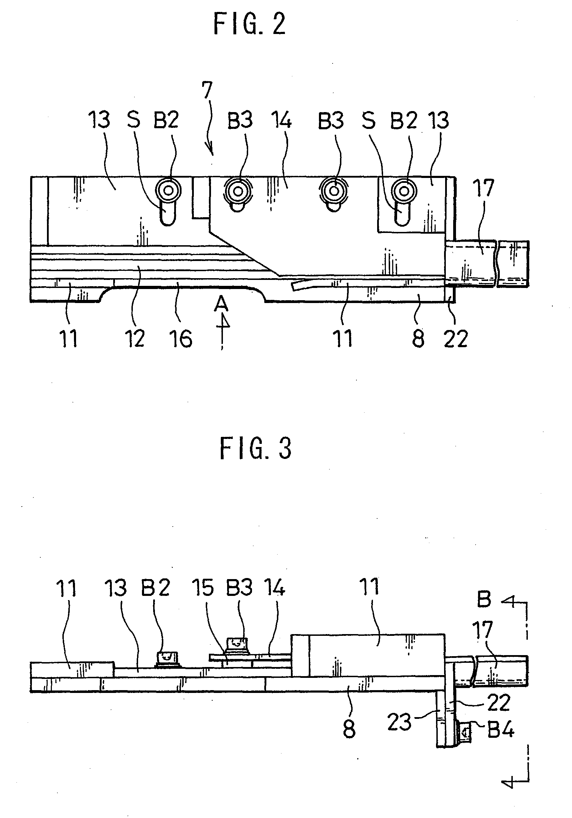

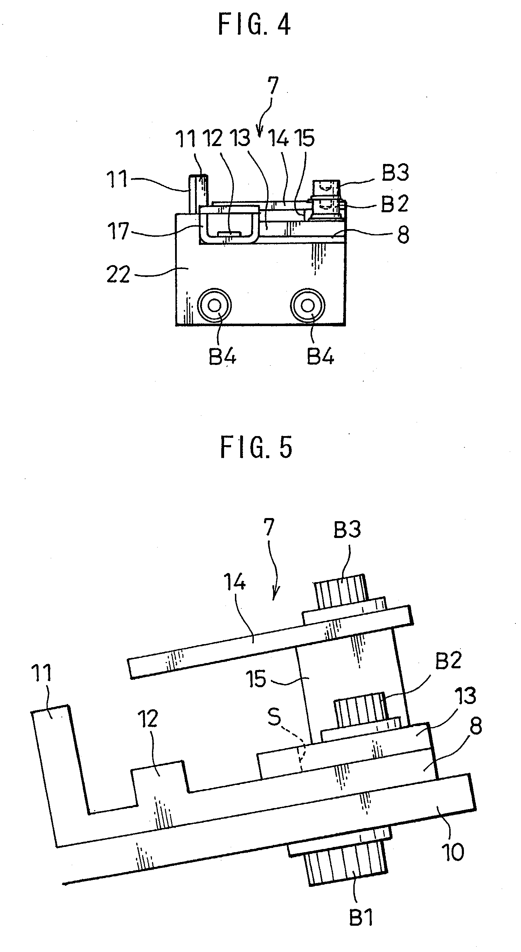

Fig. 1 is a plan view illustrating a typical example of a case that the present invention is worked in a transportation track installed on a vibration bowl for feeding welding nuts. Fig. 2 is a plan view showing a sorting unit of the present invention in detail. Fig. 3 is a view taken in a direction of an arrow A in Fig. 2. Fig. 4 is a view taken in a direction of arrows B in Fig. 3. Fig. 5 is a schematic cross sectional view illustrating attaching a bowl main body, a structure of assembling unit parts and a parts track.

A vibration-type parts feeder 1 is for sorting welding nuts N. As shown in Fig. 1, a vibration bowl 2 is for housing the welding nuts N. The welding nuts N housed in the vibration bowl 2 gradually go up along a bowl wall 5 form a separation bottom 4 of the vibration bowl 2 by vibration, and are arranged on a spiral-shaped parts transportation track 3 and transported outside.

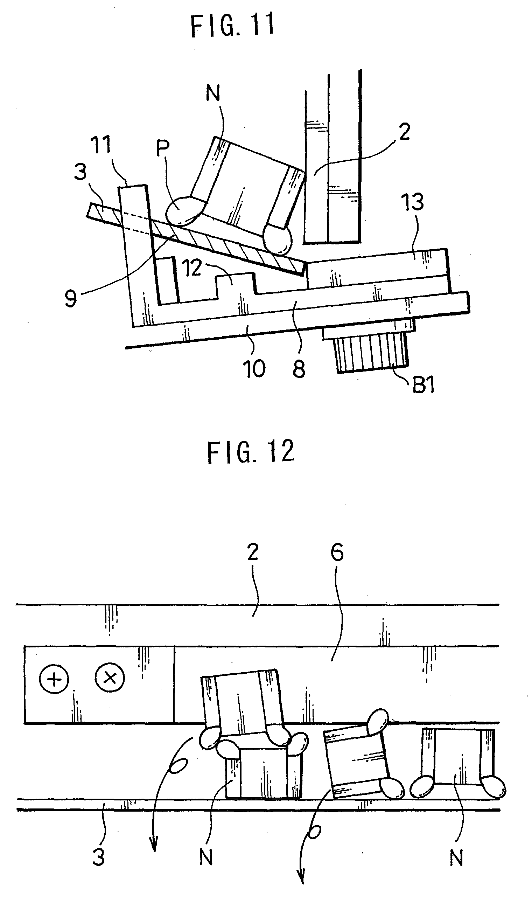

A first wiper 6 is, as shown in Figs. 1 and 12, projected inside from the bowl wall 5 above the parts transportation track 3, so that a width of a parts track of the transportation track 3 can be restrained to a specific width against inside of the vibration bowl 2. Thus, as the welding nuts N pass through the specific width of the parts track, a transportation quantity of the welding nuts N transported at random on the parts transportation track 3 regardless of upward and downward thereof is limited and excess parts are removed, and the welding nuts N can be arranged and transported.

A sorting unit 7 is shown in Figs. 2 through 4. A sorting plate 8 constituting the sorting unit 7 is, as shown in Figs. 5, 10 and 11, mounted detachably to a fixed supporting plate 10 extending outside of the vibration bowl 2 by a bolt B1 adjacent to a parts outlet at a top end portion 9 of the parts transportation track 3 provided in the vibration bowl 2.

The sorting plate 8 is formed slantly so as to make an outside of the parts track (a bowl wall side) continuous to the end portion of the transportation track 3 high and make an inside (a center side of the bowl) thereof low, and guide (a side plate) 11 which is made higher at about 0.5 mm through 1.0 mm than height of normal positioned welding nuts N is provided inside of the sorting plate 8. A lacking portion for removing 16 which is formed by cutting a part of the side plate of the guide 10 is provided in the guide 11, for instance as shown in Figs. 2, 6, 7 and 10, as a means for removing parts which remove only bad positioned welding nuts on the way of it.

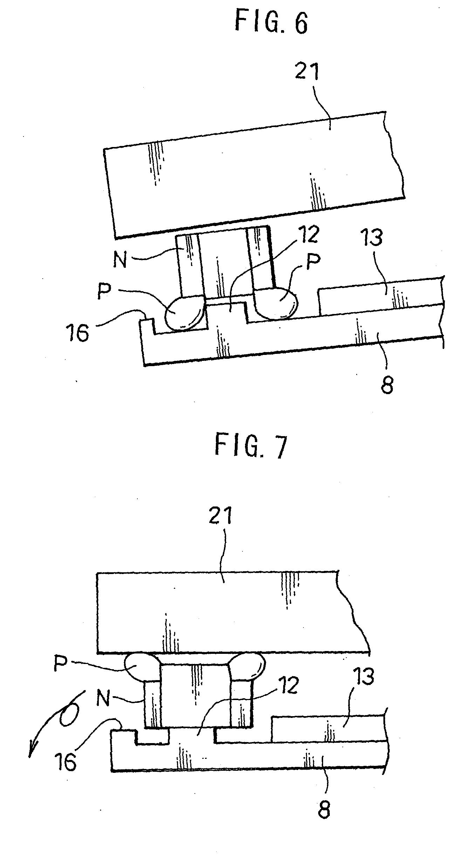

A sorting rail 12 whose cross section is convex and which welding projections positioned at both sides of the normal positioned welding nuts can be stridden over is formed on a part passage of the sorting plate 8 in a nut advanced direction. In the sorting rail 12, normal positioned welding nuts can pass through so that welding projections P in the both sides thereof stride over the sorting rail 12 when the welding projections P are positioned downwardly as shown in Fig. 6, but in the case of abnormal positioned welding nuts N whose projections P are positioned upwardly and which have downward welding projections P as shown in Fig. 7, the abnormal positioned welding nuts N slip on the sorting rail 12 slant inside and drop into the vibration bowl 2.

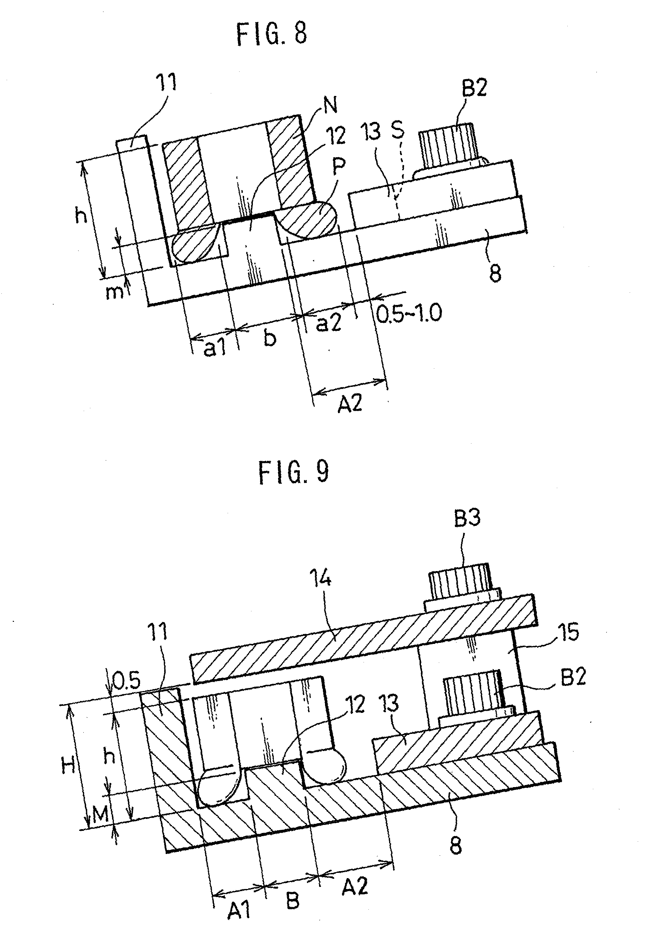

As shown in Fig. 9, widths A1 and A2 at both sides of the sorting rail 12 which allows the normal positioned welding nuts to run are that an inside track width A1 in one hand is fixed, and an outside track width A2 in another hand, as shown in Fig. 2, is adjusted by a width limitation plate 13 which can adjusted within a permissible range of an oval-shaped hole S formed in a width direction thereof.

In this case, as shown in Fig. 2, the width limitation plate 13 is attached to the sorting plate 8 by two bolts B2. A parts track distance A2 between the width limitation plate 13 and the sorting rail 12 The width limitation plate 13 is put into the sorting plate 8 side by inserting the bolts B2 into the oval-shaped hole S formed thereof so that a distance between the width limitation plate 13 and the sorting rail 12 can be adjusted in a width direction thereof within a range of 0.5 mm through 1.0 mm to a dimension a2 of the projection P of the welding nut N.

Above the sorting rail 12, as shown in Figs. 3 and 4, a presser plate 14 is installed by putting collars 15 set so as to match to a height at which only the normal positioned nuts can pass through and bolts B3.

Accordingly, the collars 15 are the same number of the bolts B3, as shown in Fig. 9, is set to dimension H higher by 0.5 mm than a height h of the normal positioned nut, and is installed between the presser plate 14 and the sorting plate 8 by the bolts B3 to adjust a height from the sorting rail 12.

The guide 11 is constituted so as to be a little higher than height h of the normal positioned nut except for the lacking portion for removing 16 formed on the way in the parts advanced direction.

Each dimension of the sorting unit 7 corresponds to each dimension of the feeding nuts. That is to say, A1 - a1, A2 - a3, B - b, H - h and M - m correspond respectively. Note that A1, B and M of the sorting plate 8 are fixed, so that only the sorting plate 8 is changed when it does not match to dimensions of the feeding nuts.

As shown in Figs. 2 through 4, at an end of a parts track of the sorting plate 8 advanced along the guide 11, a pipe sleeve for transportation 17 fixed in a support plate 22 is installed in front of the support plate 23 fixed on the sorting plate 8 by bolts B4. As shown in Fig. 1, a tube for feeding parts 18 consisting of a material with plasticity and clarity (including a hose or a square tube consisting of a vinyl material or polyurethane rubber material) is connected with the pipe sleeve for transportation 17.

A feeder unit put into a resistance spot welder omitted in the figures is connected with an end of the tube for feeding parts. As shown in Fig. 1, an air nozzle 19 whose air discharge opening 20 faces to the tube for feeding parts is installed to the pipe sleeve for transportation 17. Compressed air is injected from the air discharge opening 20 of the air nozzle 20. In a moment the air is injected, the normal positioned welding nut N is blown off from the pipe sleeve for transportation 17 into the tube for feeding parts 18 and is transported to the feeder unit installed on the spot welder.

An attached angle of the air discharge opening 20 of the air nozzle 19 is considered so that the discharged compressed air is flown smoothly without whirling, and further the compressed air may be discharged from between the two collars 15 except for the attached position as above mentioned, or the air discharge opening 20 may be arranged so as to face from the presser plate 14 to the pipe sleeve for transportation 17.

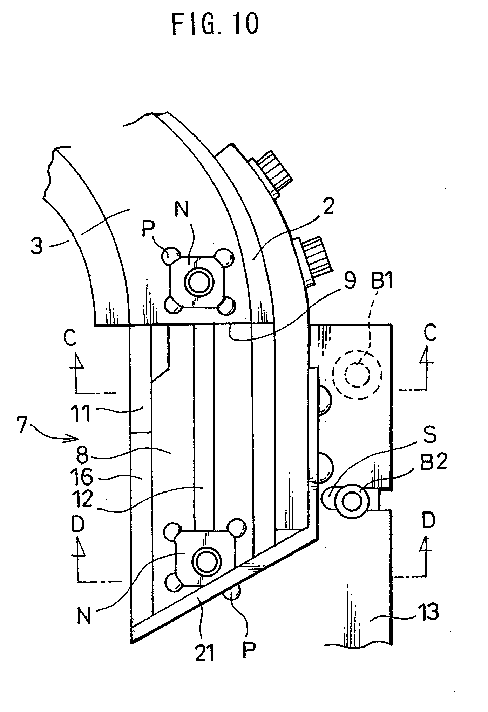

A second wiper 21 shown in Figs. 6 and 7 makes a width of the part passage of the transportation track 3 narrow gradually to the inside of the vibration bowl adjacent to the presser plate 14 at the end portion 9 of the transportation track 3 as shown in Fig. 10, so that the welding nuts N passed near a center of the sorting plate 8 are sorted and arranged in the fixed direction finally before entering an passage under the presser plate.

In this case, only the normal positioned welding nuts N whose projections P are downward can pass through the passage under the second wiper 21 as shown in Fig. 6, but the abnormal positioned welding nuts N whose projections P are upward drop from the lacking portion for removing 16 due to being blocked by the second wiper 21.

Then, the normal positioned welding nuts N pass through the lacking portion for removing 16, as shown in Fig. 9, and go under the presser plate 14 to advance along the guide 11 higher than height of the normal positioned nut N. The welding nuts N are advanced in the condition as they are to be transported to the pipe sleeve for transportation 17, as shown in Fig. 1, and flow into the parts feeding tube 18 in a direction indicated by an arrow at the moment of injecting the compressed air from the air discharging opening 20 to be fed to the feeder unit attached to the spot welder.

The welding nuts N are supplied from the feeder unit to a work set on a guide pin of the lower electrode to be welded.

The present invention is to unitize a device for sorting upward and downward of the welding nuts, and to correspond to change of dimensions of the supplied parts in a common bowl by changing or adjusting only the unit for sorting upward and downward 7.

Besides, when a distance A1 between the guide 11 and the sorting rail 12 is not matched to dimensions of the supplied parts, the sorting plate 8 is made so that the another kind of sorting plate 8 can be prepared and replaced, so that it is possible to sort irregular parts.

It is considered to sort upward and downward of the welding nut with projections for welding in a resistance welding field in the embodiment of the present invention, but a system for changing a sorting unit of the present invention can be applied to a use of a device for supplying process parts for various assemblies corresponding to size or shape of the supplying parts.

## Claims

1. A vibration-type parts feeding method that welding nuts put on a parts transportation track arranged spirally along an inner wall of a vibration bowl of a parts feeder to be arranged in turn, and are transported from a parts discharging outlet at an top end of said track to a desired place, **characterized in that**:
a sorting unit for judging normal position or abnormal position of said welding nuts is installed detachably adjacent to said parts discharging outlet of said bowl, so that only said sorting unit can be changed in order to match to a size of used welding nuts.

2. A vibration-type parts feeding method according to claim 1, **characterized in that**:
said sorting unit installed detachably adjacent to said parts discharging outlet of said bowl removes abnormal positioned welding nuts outside of said parts transportation track, and makes only normal positioned welding nuts pass through and transport to said desired place.

3. A vibration-type parts feeding method according to claim 1, **characterized in that**:
said sorting unit installed detachably adjacent to said parts discharging outlet of said bowl comprises a sorting plate for guiding said welding nuts, a sorting rail provided in an direction that said welding nuts are advanced in said sorting plate and width limitation plate for limiting a distance of a parts track to said rail, and
said width limitation plate can move in a direction to said rail and adjusted corresponding to size of said welding nuts.

4. A vibration-type parts feeding method according to claim 1, **characterized in that**:
said sorting unit installed detachably adjacent to said parts discharging outlet of said bowl comprises a sorting plate for guiding said welding nuts, a sorting rail which is provided along said sorting plate and over which projections positioned at both sides of said normal positioned welding nut can stride, and a presser plate which is formed at a height that only normal positioned welding nuts are allowed to pass through above said sorting rail, and
a height from said rail in said presser plate can be adjusted corresponding to size of said welding nuts.

5. A vibration-type parts feeding method according to claim 1, **characterized in that**:
said sorting unit installed detachably adjacent to said parts discharging outlet of said bowl comprises a sorting plate for guiding said welding nuts, a sorting rail which is provided along said sorting plate and over which projections positioned at both sides of said normal positioned welding nut can stride, and a presser plate which is formed at a height that only normal positioned welding nuts are allowed to pass through above said sorting rail,
said width limitation plate can move in a direction to said rail and adjusted corresponding to size of said welding nuts, and
a height from said rail in said presser plate can be adjusted corresponding to size of said welding nuts.

6. A vibration-type parts feeding device comprising a vibration bowl housing welding nuts with a plurality of projections for welding, a parts transportation track which is arranged spirally along an inner wall of said vibration bowl, on which said welding nuts are put to be arranged in turn and along which said welding nuts are risen to be transported to a discharge opening above said bowl continuously by vibration of said bowl; and a sorting unit for judging normal position or abnormal position of said welding nuts, **characterized in that**:
said sorting unit is installed detachably adjacent to said parts discharging outlet of said bowl.

7. A vibration-type parts feeding device according to claim 6, **characterized in that**:
said sorting unit installed detachably adjacent to said parts discharging outlet of said bowl comprises a sorting plate for guiding said welding nuts, a sorting rail provided along said sorting plate over which projections for welding at both sides of normal positioned welding nuts can stride, and a presser plate which is formed at a height that only said normal positioned welding nuts are allowed to pass through.

8. A Vibration-type parts feeding device according to claim 6, **characterized in that**:
said sorting unit installed detachably adjacent to said parts discharging outlet of said bowl comprises a sorting plate including a removing portion in at least one part of a parts track so as to drop abnormal positioned welding nuts outside the parts track by being slant inside said bowl, a sorting rail provided along said sorting plate over which projections for welding at both sides of normal positioned welding nuts can stride, and a presser plate which is formed at a height that only said normal positioned welding nuts are allowed to pass through.

9. A vibration-type parts feeding device according to claim 6, **characterized in that**:
said sorting unit installed detachably adjacent to said parts discharging outlet of said bowl comprises a sorting plate for guiding said welding nuts, a sorting rail provided in an direction that said welding nuts are advanced in said sorting plate and width limitation plate for limiting a distance of a parts track to said rail, and
said width limitation plate can move in a direction to said rail and adjusted corresponding to size of said welding nuts.

10. A vibration-type parts feeding device according to claim 6, **characterized in that**:
said sorting unit installed detachably adjacent to said parts discharging outlet of said bowl comprises a sorting plate for guiding said welding nuts, a sorting rail which is provided along said sorting plate and over which projections positioned at both sides of said normal positioned welding nut can stride, and a presser plate which is formed at a height that only normal positioned welding nuts are allowed to pass through above said sorting rail, and
a height from said rail in said presser plate can be adjusted corresponding to size of said welding nuts.

11. A vibration-type parts feeding device according to claim 6, **characterized in that**:
said sorting unit installed detachably adjacent to said parts discharging outlet of said bowl comprises a sorting plate for guiding said welding nuts, a sorting rail which is provided along said sorting plate and over which projections positioned at both sides of said normal positioned welding nut can stride, and a presser plate which is formed at a height that only normal positioned welding nuts are allowed to pass through above said sorting rail,
said width limitation plate can move in a direction to said rail and adjusted corresponding to size of said welding nuts, and
a height from said rail in said presser plate can be adjusted corresponding to size of said welding nuts.
